(19) **Europäisches Patentamt European Patent Office Office européen des brevets**

(11) **EP 2 192 641 B1**

(12) **EUROPEAN PATENT SPECIFICATION**

(45) Date of publication and mention
of the grant of the patent:
**08.11.2017 Bulletin 2017/45**

(21) Application number: **08831653.4**

(22) Date of filing: **17.09.2008**

(51) Int Cl.:
*H01M 4/587* (2010.01)   *H01M 10/0525* (2010.01)
*H01M 4/02* (2006.01)

(86) International application number:
**PCT/JP2008/066770**

(87) International publication number:
**WO 2009/038093 (26.03.2009 Gazette 2009/13)**

(54) **AMORPHOUS CARBON MATERIAL FOR NEGATIVE ELECTRODE OF LITHIUM ION SECONDARY BATTERY AND METHOD FOR PRODUCING THE SAME**

**AMORPHES KOHLENSTOFFMATERIAL FÜR NEGATIVE ELEKTRODE EINER LITHIUMIONEN-SEKUNDÄRBATTERIE UND HERSTELLUNGSVERFAHREN DAFÜR**

**MATÉRIAU DE CARBONE AMORPHE POUR UNE ÉLECTRODE NÉGATIVE DE BATTERIE SECONDAIRE AU LITHIUM ION ET PROCÉDÉ POUR LE PRODUIRE**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **18.09.2007 JP 2007241266**

(43) Date of publication of application:
**02.06.2010 Bulletin 2010/22**

(73) Proprietor: **Nippon Oil Corporation Tokyo 105-8412 (JP)**

(72) Inventors:
• **SAKAMOTO, Akio**
  **Tokyo 105-8412 (JP)**
• **TAKESHITA, Kiwamu**
  **Tokyo 105-8412 (JP)**
• **FUJII, Masaki**
  **Kawasaki-shi**
  **Kanagawa 210-8532 (JP)**
• **TANO, Tamotsu**
  **Kuga-gun**
  **Yamaguchi 740-0061 (JP)**
• **OYAMA, Takashi**
  **Kuga-gun**
  **Yamaguchi 740-0061 (JP)**

(74) Representative: **Grünecker Patent- und Rechtsanwälte PartG mbB Leopoldstraße 4 80802 München (DE)**

(56) References cited:
EP-A2- 0 205 856      JP-A- 8 098 116
JP-A- 8 104 510       JP-A- 2000 223 123
JP-A- 2006 066 334    JP-A- 2006 252 817
JP-A- 2007 019 257    JP-A- 2007 149 706

## Description

### Technical Field

The present invention relates to a method for producing an amorphous carbon material for the negative electrode of a lithium ion secondary battery.

### Background Art

Lithium ion secondary batteries have higher energy densities than conventional secondary batteries such as nickel cadmium cells, nickel hydrogen cells and lead storage batteries and are therefore expected to have applications in hybrid vehicles and electric vehicles. The carbon materials used as active materials in the electrodes of secondary batteries have been extensively studied with the aim of increasing their performance (see Patent documents 1 and 2, for example).

Carbon materials used as negative electrode materials in lithium ion secondary batteries are largely classified as either graphite or amorphous. Graphite carbon materials have the advantage of high energy density per unit volume compared to amorphous carbon materials. Therefore, graphite carbon materials are widely used as negative electrode materials in lithium ion secondary batteries for cellular phones and laptop computers that are compact and require large charge service capacities. Graphite has a structure with layers of carbon atoms regularly arranged in a hexagonal mesh, and during charge-discharge, intercalation-deintercalation of lithium ions takes place at the edges of the hexagonal mesh.

### Citation List

[Patent document 1] Japanese Patent No. 3056519
[Patent document 2] Japanese Examined Patent Publication HEI No. 4-24831

EP 0205856 A2 relates to a secondary battery in a nonaqueous type using a substance indicated in I below and/or a substance indicated in II below as an active material for either of positive and negative electrodes:

- I: a composite oxide possessing a layer structure and represented by the general formula $A_xM_xN_zO_2$, wherein A stands for at least one alkali metal, M for a transition metal, N for at least one member selected from the group consisting of Al, In, and Sn, and x, y, and z respectively for the number falling in a specific range,
- II: an n-doped carbonaceous material which has a BET-method specific surface area, and a crystal thickness, Lc, in the X-ray diffraction and a true density, p, both having the values falling in a specific range.

### Summary of Invention

### Problems to be Solved by the Invention

However, while increased energy densities per unit volume are obtained as mentioned above when graphite carbon materials are used as negative electrode materials in lithium ion secondary batteries, the charge-discharge rates are still in need of improvement for application to automobiles such as hybrid vehicles. This is attributed to the fact that the high crystallinity of graphite does not allow adequately efficient diffusion of solvated lithium ions into the crystal interiors.

Amorphous carbon materials, on the other hand, have irregular layering of hexagonal meshes or lack a mesh-like surface structure. When they are used as negative electrode materials in lithium ion secondary batteries, therefore, intercalation-deintercalation of lithium proceeds over the entire surfaces of the carbon particles, thus allowing excellent input/output characteristics to be achieved. Still, lithium ion secondary batteries employing amorphous carbon materials as negative electrode materials have a large irreversible capacity as well as low energy density per unit volume. The cause of the large irreversible capacity is believed to be the irregularity of the amorphous carbon material structure, while the cause of the low energy density per unit volume is believed to be the low specific gravity of amorphous carbon materials.

The present invention has been accomplished in light of these circumstances, and its object is to provide a method for producing an amorphous carbon material that is useful for obtaining high levels of both the excellent input/output characteristics and high energy density per unit volume of lithium ion secondary batteries.

**Means for Solving the Problems**

When an amorphous material is used as the negative electrode material for a lithium ion secondary battery, it has been considered difficult to obtain both high service capacity and low irreversible capacity compared to using a graphite material. However, as a result of studying a wide range of amorphous carbon materials composed of graphitizing carbon, such as petroleum coke, the present inventors have found that graphitizing carbon materials classified as amorphous materials and having similar true densities include some materials that have excellent properties allowing high levels of both high service capacity and excellent input/output characteristics to be obtained, and some materials that do not have such properties.

Yet since crystals of such amorphous materials have not yet been developed, it has been difficult to obtain the information necessary to distinguish between those materials with and without excellent properties, even by making use of techniques such as X-ray diffraction. The present inventors therefore graphitized different types of graphitizing carbon at a temperature of 3000°C and analyzed the resulting graphite materials. It was found, as a result, that the group of graphitizing carbon with graphitized true density above a certain value matched the group with excellent properties, and the present invention has been thereupon completed.

Specifically, the amorphous carbon material for the negative electrode of a lithium ion secondary battery obtained with the method of the invention has a true density of 1.800-2.165 g/cm$^3$, but has a true density of 2.255 g/cm$^3$ or greater when subjected to graphitizing in an inert gas atmosphere at a temperature of 3000°C.

When an amorphous carbon material obtained with the method of the invention is used as a negative electrode material it is possible to obtain high levels of both excellent input/output characteristics and high energy density per unit volume for lithium ion secondary batteries.

The present inventors further discovered that a group of graphitizing carbon exists that can provide high levels of both high service capacity and low irreversible capacity and that has exceedingly excellent charge properties. This group exhibited the properties of (1) a large crystallite size (Lc and La) after graphitizing and (2) a small plane spacing ($d_{002}$) after graphitizing, and corresponded to the group with extremely high graphitizability. Specifically, graphitizing carbon, wherein crystallization of the graphite develops by graphitizing at a temperature of 3000°C, has minute voids that do not inhibit development of crystals when the crystals are still undeveloped, and the voids facilitate diffusion of solvated lithium to confer a high charge property. Therefore, the amorphous carbon material of the invention preferably has the following structure.

The amorphous carbon material of the invention preferably has a crystallite size Lc of 3-12 nm in the c-axial direction according to X-ray diffraction, and a crystallite size Lc of 80 nm or greater when subjected to graphitizing in an inert gas atmosphere at a temperature of 3000°C.

Also, the amorphous carbon material obtained with the method of the invention has a mean interlayer distance $d_{002}$ of no greater than 0.3361 nm according to X-ray diffraction when subjected to graphitizing in an inert gas atmosphere at a temperature of 3000°C. Furthermore, the amorphous carbon material of the invention preferably has a crystallite size La of 250 nm or greater in the a-axial direction according to X-ray diffraction when subjected to graphitizing in an inert gas atmosphere at a temperature of 3000°C.

The method for producing the amorphous carbon material for the negative electrode of a lithium ion secondary battery of the invention comprises a step of coking treatment, followed by calcining, of a stock oil composition obtained by combining two or more different stock oils selected from among vacuum residue oil, FCC heavy oil and desulfurized heavy oil produced in the petroleum refining process, so that the true density of the amorphous carbon material is 1.800-2.165 g/cm$^3$ and the true density is 2.255 g/cm$^3$ or greater when the amorphous carbon material is subjected to graphitizing in an inert gas atmosphere at a temperature of 3000°C.

According to the method of the invention it is possible to industrially produce an amorphous carbon material that allows high levels to be achieved for both high service capacity and low irreversible capacity for lithium ion secondary batteries, with a high degree of reproducibility.

**Effect of the Invention**

According to the invention it is possible to provide a method for producing an amorphous carbon material for the negative electrode of a lithium ion secondary battery that is useful for achieving high levels of both excellent input/output characteristics and high energy density per unit volume in lithium ion secondary batteries, as well as a method for producing it.

By using an amorphous carbon material obtained with the process of the invention as the negative electrode in a lithium ion secondary battery, it is possible to obtain a lithium ion secondary battery with a rapid charge rate and high energy density per unit volume. The lithium ion secondary battery is suitable not only for cellular phones and laptop computers but also for other purposes that requires rapid charge-discharge, such as hybrid vehicles, plug-in hybrid vehicles, electric vehicles and power tools.

**Description of Embodiments**

Preferred embodiments of the invention will now be described in detail.

<Amorphous carbon material for negative electrode of lithium ion secondary battery>

For excellent performance of the amorphous carbon material as a negative electrode material for a lithium ion secondary battery, it is essential for it to have a true density of 1.800-2.165 $g/cm^3$, and a true density of 2.255 $g/cm^3$ or greater when it is subjected to graphitizing in an inert gas atmosphere at a temperature of 3000°C. Graphitizing refers to heat treatment at 3000°C in an atmosphere with 95 vol% or greater nitrogen gas, for 1 hour or longer.

If the true density of the amorphous carbon material is less than 1.800 $g/cm^3$, the electrode density will not rise and consequently the energy density per unit volume will be reduced and the irreversible capacity increased. If the true density is greater than 2.165 $g/cm^3$, on the other hand, the electrode density will rise, but the low number of carbons effectively functioning for occlusion of lithium will lower the energy density per unit volume. If the graphitized true density is less than 2.255 $g/cm^3$, diffusion of the solvated lithium ions in the electrode will be limited and the charge rate of the lithium ion secondary battery will be insufficient. The "true density" referred to here is the value measured by the method of JIS R7222.

The amorphous carbon material preferably also satisfies the following conditions.

The amorphous carbon material has a true density of 1.800-2.165 $g/cm^3$ as mentioned above, but the lower limit of the true density is more preferably 2.105 $g/cm^3$ and even more preferably 2.125 $g/cm^3$. The upper limit for the true density of the amorphous carbon material is more preferably 2.150 $g/cm^3$ and even more preferably 2.139 $g/cm^3$. From the viewpoint of obtaining a high charge rate for lithium ion secondary batteries, the amorphous carbon material preferably has a graphitized true density of 2.257 $g/cm^3$ or greater.

The amorphous carbon material preferably has a lower limit of 3 nm and more preferably 5 nm for the crystallite size Lc in the c-axial direction, as determined by wide-angle X-ray diffraction. If the crystallite size Lc is less than 3 nm the electrode density will not rise, and thus although the number of carbon atoms effectively functioning for occlusion of lithium will increase resulting in a greater energy density per unit carbon weight, the energy density per unit volume will tend to be reduced and the irreversible capacity will tend to be increased. On the other hand, the upper limit for the crystallite size Lc is preferably 12 nm and more preferably 8 nm. If the crystallite size Lc is greater than 12 nm the electrode density will rise, but the reduced number of carbon atoms effectively functioning for occlusion of lithium will result in a lower energy density per unit carbon weight, thus tending to reduce the energy density per unit volume.

The amorphous carbon material preferably has a graphitized crystallite size Lc of 80 nm or greater, more preferably 100 nm or greater and even more preferably 150 nm or greater. If the graphitized crystallite size Lc is less than 80 nm, the charge rate of the lithium ion secondary battery will tend to be insufficient.

The amorphous carbon material has a mean interlayer distance ($d_{002}$) of no greater than 0.3361 nm and preferably no greater than 0.3359 nm after graphitizing, as determined by wide-angle X-ray diffraction. If the mean interlayer distance ($d_{002}$) after graphitizing is greater than 0.3361 nm, the charge rate of the lithium ion secondary battery will tend to be insufficient.

The amorphous carbon material has a crystallite size La of preferably 250 nm or greater, more preferably 300 nm or greater and even more preferably 500 nm or greater in the a-axial direction after graphitizing, as determined by wide-angle X-ray diffraction. If the graphitized crystallite size La is less than 250 nm, the charge rate of the lithium ion secondary battery will tend to be insufficient.

For this embodiment, the interlayer distance $d_{002}$ (lattice constant) and crystallite sizes Lc, La of the amorphous carbon material and its graphitized form are the values determined by X-ray diffraction according to "Measurement Methods for Lattice Constants and Crystallite Sizes of Artificial Graphite" established by the 117th Committee of the Japan Society for the Promotion of Science, and they are measured as follows.

Specifically, a sample powder is filled into a specimen holder and the X-ray diffraction pattern is obtained with a line source of CuKα-rays monochromatized with a graphite monochromator. The peak position in the diffraction pattern is determined by the elastic center method (a method in which the center of gravity of the diffraction profile is calculated and the position of the peak at the corresponding 2θ value is determined), with correction using the diffraction peak of the (111) plane for high purity silicon powder as the reference material. The wavelength of the CuKα-rays is 0.15418 nm, and the interlayer distance $d_{002}$ of the microcrystalline carbon is calculated by the Bragg equation represented by the following formula (1).

$$d_{002} = \lambda/(2\sin\theta) \ (1)$$

The presence of graphite structure formation in the specimen can be confirmed by whether a distinct peak with 2θ at approximately 25° is found in the powder X-ray diffraction pattern of the specimen. Specifically, graphite has structure comprising numerous layers each with a planar network structure of benzene rings, and in powder X-ray diffraction measurement a diffraction peak based on $C_{002}$ is observed as a sharp peak (20 near 25°) at interlayer distance $d_{002}$ = 0.335 nm. The half-power band width ($\beta$) is measured from the diffraction profile and the crystallite sizes are determined by following formula (2).

$$Lc_{002} = 91/\beta \ (2)$$

The graphitized amorphous carbon material of this embodiment has a structure highly similar to graphite when their X-ray diffraction patterns are compared.

<Production method>

A method for producing an amorphous carbon material for the negative electrode of a lithium ion secondary battery will now be explained in detail. The amorphous carbon material for the negative electrode of a lithium ion secondary battery of this embodiment is obtained by a production method comprising a step of dry distillation treatment (coking treatment) and then calcining of a stock oil composition obtained by combining two or more different stock oils selected from among vacuum residue oil, FCC heavy oil and desulfurized heavy oil produced in the petroleum refining process.

When the amorphous carbon material obtained by this production method does not satisfy the conditions relating to the true density, and the preferred conditions for the crystallite sizes Lc, La and mean interlayer distance $d_{002}$ are not satisfied, the stock oil composition components or mixing ratio and the coking treatment conditions and calcining conditions may be appropriately modified.

(Stock oil composition)

The vacuum residue oil is preferably heavy oil having an initial boiling point of 300°C or higher, an asphaltene content of no greater than 12 wt%, a saturated component content of 50 wt% or greater and a sulfur content of no greater than 0.3 wt%, obtained as residue oil after vacuum distillation of a prescribed stock oil. The stock oil may be, for example, crude oil, vacuum distillation bottom oil obtained by distillation of crude oil, or a blended oil comprising them. The treatment conditions for vacuum distillation of such stock oils are not particularly restricted so long as the boiling point, asphaltene content, saturated component and sulfur content of the obtained vacuum residue oil each satisfy the conditions mentioned above, but the pressure is preferably no higher than minus 30 kPa and the temperature is preferably at least 400°C.

FCC heavy oil is preferably heavy oil with an initial boiling point of 150°C or higher and a sulfur content of no greater than 0.5 wt%, obtained by fluidized catalytic cracking of a prescribed stock oil. The term "fluidized catalytic cracking" means treatment using a solid acid catalyst for decomposition of the high boiling point fraction. The fluidized catalytic cracker used for the treatment is called a FCC (Fluidized Catalytic Cracking) apparatus. The stock oil for FCC heavy oil is not particularly restricted so long as it can yield heavy oil that satisfies the aforementioned conditions for the boiling point and sulfur content by fluidized catalytic cracking, but it is preferably hydrocarbon oil with a 15°C density of 0.8 g/cm$^3$ or greater. As such stock oils there may be mentioned atmospheric distillation bottom oil, vacuum distillation bottom oil, shale oil, tar sand bitumen, Orinoco tar, coal liquefaction oil, and heavy oils obtained by hydrorefining of these oils. It may further contain relatively light oils such as straight-run light oil, vacuum gas oil, desulfurized light oil and desulfurized vacuum gas oil. For this embodiment, atmospheric distillation bottom oil and vacuum distillation bottom oil are most preferably used.

The conditions for fluidized catalytic cracking are not particularly restricted so long as they yield heavy oil having a boiling point and sulfur content satisfying the conditions mentioned above, and for example, preferably the reaction temperature is 480-550°C, the total pressure is 0.1-0.3 MPa, the catalyst/oil ratio is 1-20 wt/wt and the contact time is 1-10 seconds. The catalyst used for fluidized catalytic cracking may be, for example, a silica-alumina catalyst or zeolite catalyst, or such a catalyst supporting a metal such as platinum. Commercial catalysts may also be used.

The desulfurized heavy oil is preferably heavy oil with an initial boiling point of 200°C or higher, obtained by hydrodesulfurization of heavy oil with a sulfur content of 2 wt% or greater under conditions with a total pressure of at least 16 MPa, to a decomposition rate of no greater than 30%. The heavy oil used as the stock oil for desulfurized heavy oil may be, for example, crude oil, atmospheric distillation bottom oil or vacuum distillation bottom oil obtained by distillation of crude oil, or visbreaking oil, tar sand oil, shale oil, or a blended oil of the foregoing. Atmospheric distillation bottom oil and vacuum distillation bottom oil are preferably used among these.

The hydrodesulfurization to obtain the desulfurized heavy oil is carried out under conditions with a total pressure of 16 MPa or greater, preferably 17 MPa or greater and more preferably 18 MPa or greater. At a total pressure of below 16 MPa, decomposition of the heavy oil by hydrodesulfurization will proceed excessively, making it impossible to obtain heavy oil effective as a stock oil for coke coal (petroleum coke).

The conditions for hydrodesulfurization other than the total pressure are not particularly restricted so long as the decomposition rate is no greater than 30%, but each of the conditions are preferably set as follows. Specifically, the temperature for the hydrodesulfurization is preferably 300-500°C and more preferably 350-450°C; the hydrogen/oil ratio is preferably 400-3000 NL/L and more preferably 500-1800 NL/L; the hydrogen partial pressure is preferably 7-20 MPa and more preferably 8-17 MPa; and the liquid space velocity (LHSV) is preferably 0.1-3 $h^{-1}$, more preferably 0.15-1.0 $h^{-1}$ and even more preferably 0.15-0.75 $h^{-1}$.

The catalyst used for the hydrodesulfurization (hydrodesulfurization catalyst) may be a Ni-Mo catalyst, Co-Mo catalyst, or a combination of these, and it may be a commercially available product.

The heavy oil with an initial boiling point of 200°C or higher and preferably 250°C or higher, from the hydrodesulfurized oil obtained by the hydrodesulfurization described above, is used as desulfurized heavy oil.

The method for obtaining an amorphous carbon material according to this embodiment preferably comprises obtaining a stock oil composition as a blend of two or more stock oils selected from among vacuum residue oil, FCC heavy oil and desulfurized heavy oil, subjecting the stock oil composition to coking to produce petroleum raw coke, and calcining the petroleum raw coke.

The blending ratio of the vacuum residue oil, FCC heavy oil and desulfurized heavy oil is not particularly restricted so long as the desired amorphous carbon material can be obtained, and two or three different types may be used in combination. For a combination of FCC heavy oil and desulfurized heavy oil, for example, it is blended with a desulfurized heavy oil content ratio of preferably 5 wt% or greater, more preferably 10 wt% or greater, even more preferably 15 wt% or greater, and also preferably no greater than 95 wt%, more preferably no greater than 90 wt% and even more preferably no greater than 85 wt%.

For a combination of FCC heavy oil, desulfurized heavy oil and vacuum residue oil, it is blended with a vacuum residue oil content ratio of preferably 10 wt% or greater, more preferably 20 wt% or greater and even more preferably 30 wt% or greater, and also preferably no greater than 70 wt%, more preferably no greater than 60 wt% and even more preferably no greater than 50 wt%. The FCC heavy oil and desulfurized heavy oil in this case are blended at greater than 10 wt% each. A blend composition preferably comprises at least desulfurized heavy oil.

The method for coking the blend to produce petroleum raw coke is preferably delayed coking. More specifically, the blend composition is placed in a delayed coker and subjected to coking treatment under pressure. The pressure and temperature in the delayed coker are preferably 300-800 kPa and 400-600°C, respectively.

The petroleum raw coke is calcined at 1200-1500°C and preferably 1350-1450°C using a rotary kiln, shaft kiln or the like, to obtain the desired amorphous carbon material.

<Lithium secondary battery>

A lithium secondary battery employing an amorphous carbon material for the negative electrode of a lithium ion secondary battery according to the invention will now be explained.

There are no particular restrictions on the method for producing the negative electrode of the lithium ion secondary battery, and for example, it may be obtained by pressure molding a mixture comprising the amorphous carbon material of this embodiment, a binder and if necessary a conductive aid and organic solvent. As an alternative method, the amorphous carbon material, a binder and a conductive aid may be formed into a slurry in an organic solvent, and the slurry coated onto a collector and dried.

The binder may be polyvinylidene fluoride, polytetrafluoroethylene, SBR (styrene-butadiene-rubber) or the like. A suitable amount of binder is 1-30 parts by weight, with about 3-20 parts by weight being preferred, with respect to 100 parts by weight of the amorphous carbon material.

The conductive aid may be carbon black, graphite, acetylene black, conductive indium-tin oxide, or a conductive polymer such as polyaniline, polythiophene or polyphenylenevinylene. The amount of conductive aid used is preferably 1-15 parts by weight with respect to 100 parts by weight of the amorphous carbon material.

As organic solvents there may be mentioned dimethylformamide, N-methylpyrrolidone, isopropanol and toluene.

The method for mixing the amorphous carbon material and binder, and the conductive aid and organic solvent used as necessary, may employ a known apparatus such as a screw-type kneader, ribbon mixer, universal mixer, planetary mixer or the like. The mixture is formed by roll pressing or press pressing, with the pressure preferably being about 1-3 t/cm$^2$.

As an alternative method for producing the negative electrode for a lithium ion secondary battery, the amorphous carbon material, binder and conductive aid may be formed into a slurry in an organic solvent, and the slurry coated onto a collector and dried.

The material and form of the collector are not particularly restricted, and for example, aluminum, copper, nickel, titanium, stainless steel or the like may be used as a foil, perforated foil or mesh, and formed as a band. A porous material such as a porous metal (metal foam) or carbon paper may also be used.

The method for coating the negative electrode material slurry onto the collector is not particularly restricted, and as examples there may be mentioned known methods such as metal mask printing, electrostatic coating method, dip coating, spray coating, roll coating, doctor blading, gravure coating, screen printing and the like. After coating, it may be subjected to rolling treatment with a flat press or calender roll, if necessary. Also, integration of the collector with a negative electrode material slurry molded into the form of a sheet, pellets or the like may be carried out by a known method using, for example, a roll or press, or a combination thereof.

A lithium ion secondary battery employing an amorphous carbon material for the negative electrode of a lithium ion secondary battery according to this embodiment can be obtained by, for example, situating a negative electrode for a lithium ion secondary battery, produced in the manner described above, opposite a positive electrode via a separator, and injecting an electrolyte solution between them.

There are no particular restrictions on the active material used for the positive electrode, and for example, a metal compound, metal oxide, metal sulfide or conductive polymer material capable of doping or intercalation with lithium ion may be used, examples of which include lithium cobaltate ($LiCoO_2$), lithium nickelate ($LiNiO_2$), lithium manganate ($LiMnO_2$), complex oxides of the foregoing, ($LiCo_XNi_YMn_ZO_2$, X+Y+Z = 1), lithium manganese spinel ($LiMn_2O_4$), lithium vanadium compounds, $V_2O_5$, $V_6O_{13}$, $VO_2$, $MnO_2$, $TiO_2$, $MoV_2O_8$, $TiS_2$, $V_2S_5$, $VS_2$, $MoS_2$, $MoS_3$, $Cr_3O_8$, $Cr_2O_5$, olivine-type $LiMPO_4$ (M:Co, Ni, Mn, Fe), conductive polymers such as polyacetylene, polyaniline, polypyrrole, polythiophene and polyacene, porous carbon, and mixtures of the foregoing.

Examples of separators to be used include nonwoven fabrics, cloths and microporous films composed mainly of polyolefins such as polyethylene or polypropylene, as well as combinations thereof. When the positive electrode and negative electrode of the lithium ion secondary battery to be fabricated are not in direct contact, it is not necessary to use a separator.

The electrolyte solution and electrolytes used in the lithium secondary battery may be a publicly known organic electrolyte solution, inorganic solid electrolytes or polymer solid electrolytes. An organic electrolyte solution is preferred from the viewpoint of electrical conductivity.

For organic electrolyte solutions there may be mentioned organic solvents including ethers such as dibutyl ether, ethyleneglycol monomethyl ether, ethyleneglycol monoethyl ether, ethyleneglycol monobutyl ether, diethyleneglycol monomethyl ether and ethyleneglycol phenyl ether; amides such as N-methylformamide, N,N-dimethylformamide, N-ethylformamide, N,N-diethylformamide, N-methylacetamide, N,N-dimethylacetamide, N-ethylacetamide and N,N-diethylacetamide; sulfur-containing compounds such as dimethyl sulfoxide and sulfolane; dialkylketones such as methyl ethyl ketone and methyl isobutyl ketone; cyclic ethers such as tetrahydrofuran and 2-methoxytetrahydrofuran; carbonates such as ethylene carbonate, butylene carbonate, diethyl carbonate, dimethyl carbonate, methylethyl carbonate, propylene carbonate and vinylene carbonate; $\gamma$-butyrolactone; N-methylpyrrolidone; acetonitrile, nitromethane and the like. Preferred examples among these include ethylene carbonate, butylene carbonate, diethyl carbonate, dimethyl carbonate, methylethyl carbonate, propylene carbonate, vinylene carbonate, $\gamma$-butyrolactone, diethoxyethane, dimethyl sulfoxide, acetonitrile and tetrahydrofuran, with particularly preferred examples including carbonate-based non-aqueous solvents such as ethylene carbonate and propylene carbonate. Any of these solvents may be used alone, or two or more thereof may be used in admixture.

Lithium salts are used as solutes (electrolytes) in these solvents. Commonly known lithium salts include $LiClO_4$, $LiBF_4$, $LiPF_6$, $LiAlCl_4$, $LiSbF_6$, LiSCN, LiCl, $LiCF_3SO_3$, $LiCF_3CO_2$ and LiN $(CF_3SO_2)_2$.

When a graphite material is used as the negative electrode for a lithium ion battery, it is known that using propylene carbonate as the electrolyte solution solvent tends to result in reductive decomposition of the propylene carbonate during charge. For this reason it is common to use highly viscous solvents such as ethylene carbonate that are resistant to reductive decomposition, but this has the disadvantage of notably impairing the low-temperature characteristics compared to using propylene carbonate. Investigation by the present inventors has confirmed that using amorphous carbon material according to this embodiment as the anode material inhibits reductive decomposition of propylene carbonate during charge.

As polymer solid electrolytes there may be mentioned polyethylene oxide derivatives and polymers comprising those derivatives, polypropylene oxide derivatives and polymers comprising those derivatives, phosphoric acid ester polymers, and polycarbonate derivatives and polymers comprising those derivatives.

There are absolutely no restrictions on selection of any of the other members required for construction of the battery.

There are also no restrictions on the structure of the lithium ion secondary battery employing an amorphous carbon material according to this embodiment as the anode material, but normally it will have a structure comprising a positive electrode and negative electrode, with a separator if necessary, wrapped up in a flat spiral fashion as a rolled polar plate group, or stacked as plates into a layered polar plate group, with the polar plate group being sealed in an outer casing. Lithium ion secondary batteries are used as paper batteries, button batteries, coin batteries, stacked cells, cylindrical cells and the like.

A lithium ion secondary battery employing an amorphous carbon material for the negative electrode of a lithium ion secondary battery according to this embodiment has excellent rapid charge-discharge characteristics compared to a lithium ion secondary battery employing a conventional carbon material, and it can be used in automobiles, including hybrid vehicles, plug-in hybrid vehicles and electric vehicles.

Examples

The present invention will now be explained in greater detail with reference to examples, with the understanding that the invention is not meant to be limited to these examples.

[Example 1]

(1) Fabrication of negative electrode carbon material

Atmospheric distillation bottom oil with a sulfur content of 3.0 wt% was hydrodesulfurized in the presence of a Ni-Mo catalyst to obtain hydrodesulfurized oil. Separately, desulfurized vacuum gas oil (sulfur content: 500 ppm by weight, 15°C density: 0.88 g/cm$^3$) was subjected to fluidized catalytic cracking to obtain fluidized catalytic cracked bottom oil. The hydrodesulfurized oil and fluidized catalytic cracked bottom oil were blended at 1:3, and the blend was introduced into a delayed coker and treated under inert gas at 550°C to obtain petroleum raw coke. Next, the raw coke was introduced into a rotary kiln and calcined at 1400°C to obtain needle coke. The obtained needle coke was pulverized to obtain coke fine particles with a mean particle size of 25 $\mu$m.

The coke fine particles were graphitized at 3000°C, yielding a graphitized product with the properties that are shown in Table 1 together with the properties of the coke fine particles. The true density was measured according to JIS R7222, and the interlayer distance ($d_{002}$) and crystallite size (La, Lc) were measured by X-ray diffraction according to "Measurement Methods for Lattice Constants and Crystallite Sizes of Artificial Graphite" established by the 117th Committee of the Japan Society for the Promotion of Science.

[Table 1]

| Carbon material | True density (g/cm$^3$) | $d_{002}$ (nm) | La (nm) | Lc (nm) |
|---|---|---|---|---|
| Coke fine particles | 2.138 | 0.3444 | - | 6 |
| 3000°C-treated product | 2.260 | 0.3357 | 710 | 226 |

(2) Evaluation of anode material charge-discharge

(a) Fabrication of negative electrode

Coke fine particles as the active material, acetylene black (AB) as the conductive material and polyvinylidene fluoride (PVDF) as the binder were combined in N-methyl-2-pyrrolidone at a ratio of 80:10:10 (weight ratio) to prepare a slurry. The slurry was coated onto a copper foil and dried for 10 minutes with a hot plate, and press molded with a roll press.

(b) Fabrication of evaluation cell

There were used the aforementioned composition (30 × 50 mm) as the negative electrode, lithium nickelate (30 × 50 mm) as the positive electrode, a mixture of ethylene carbonate (EC)/methyl ethyl carbonate (MEC) (EC/MEC weight ratio: 3/7, solute: LiPF$_6$ (1 M volume molar concentration)) as the electrolyte solution and a polyethylene porous film as the separator.

(c) Evaluation of charge rate characteristic

Using a method of charging with constant current and switching to constant voltage charge upon reaching a constant voltage (4.2 V), the charge rate was evaluated with different current densities (0.5C, 1C, 3C, 5C, 10C, 20C). The results are shown in Table 2.

[Table 2]

| Rate (C) | Charge capacity (mAh) | Utilization factor (%) |
|---|---|---|
| 0.5 | 16.1 | 100 |
| 1 | 15.9 | 98.8 |
| 3 | 15.2 | 94.2 |
| 5 | 14.5 | 89.8 |
| 10 | 12.6 | 78.1 |
| 20 | 6.1 | 37.8 |

(d) Evaluation of discharge rate characteristic

After charging at 0.2C and switching to constant voltage charge upon reaching a constant voltage and charging for 8 hours, the discharge rate was evaluated by discharge at different current densities (0.5C, 1C, 3C, 5C, 10C, 20C). The results are shown in Table 3.

[Table 3]

| Rate (C) | Discharge capacity (mAh) | Utilization factor (%) |
|---|---|---|
| 0.5 | 16.3 | 100 |
| 1 | 15.8 | 97.3 |
| 3 | 15.0 | 92.1 |
| 5 | 14.5 | 88.9 |
| 10 | 13.2 | 80.9 |
| 20 | 4.7 | 29.0 |

As shown in Tables 2 and 3, when the carbon material of this example was used as the lithium ion secondary battery negative electrode with an ethylene carbonate/methylethyl carbonate-based electrolyte solution solvent, a relatively high charge-discharge capacity and utilization factor were maintained even with a high charge-discharge rate (10C).

[Example 2]

An evaluation cell was fabricated by the same procedure as Example 1, except that a propylene carbonate (PC)/methylethyl carbonate (MEC) mixture (PC/MEC weight ratio: 3/7, solute: $LiPF_6$ (1 M volume molar concentration)) was used as the electrolyte solution. The charge rate property evaluation results are shown in Table 4, and the discharge rate property evaluation results are shown in Table 5.

[Table 4]

| Rate (C) | Charge capacity (mAh) | Utilization factor (%) |
|---|---|---|
| 0.5 | 16.1 | 100 |
| 1 | 15.7 | 97.5 |
| 3 | 15.0 | 93.2 |
| 5 | 14.1 | 87.6 |
| 10 | 12.4 | 77.0 |
| 20 | 6.0 | 37.3 |

[Table 5]

| Rate (C) | Discharge capacity (mAh) | Utilization factor (%) |
|---|---|---|
| 0.5 | 16.1 | 100 |
| 1 | 15.5 | 96.2 |
| 3 | 14.5 | 90.7 |
| 5 | 14.0 | 86.9 |
| 10 | 13.0 | 80.7 |
| 20 | 4.5 | 28.0 |

As shown in Tables 4 and 5, when the coke fine particles produced in Example 1 were used as the lithium ion secondary battery negative electrode with a propylene carbonate/methylethyl carbonate-based electrolyte solution solvent, a relatively high charge-discharge capacity and utilization factor were maintained even with a high charge-discharge rate (10C).

[Comparative Example 1]

Needle coke was obtained by the same method as Example 1, except that the calcining temperature was 1600°C. The obtained needle coke was pulverized to obtain coke fine particles with a mean particle size of 25 $\mu$m. The coke fine particles were graphitized at 3000°C, yielding a graphitized product with the properties shown in Table 6 together with the properties of the 1600°C-calcined coke fine particles. An evaluation cell was fabricated by the same procedure as Example 1, except that the aforementioned 1600°C-calcined product was used as the negative electrode active material. The results of evaluating the charge rate property and discharge rate property in the same manner as Example 1 are shown in Table 7 and Table 8.

[Table 6]

| Carbon material | True density (g/cm$^3$) | $d_{002}$ (nm) | La (nm) | Lc (nm) |
|---|---|---|---|---|
| 1600°C Calcined coke | 2.188 | 0.3432 | 6 | 13 |
| 3000°C-Treated product | 2.260 | 0.3357 | 710 | 226 |

[Table 7]

| Rate (C) | Charge capacity (mAh) | Utilization factor (%) |
|---|---|---|
| 0.5 | 14.9 | 100 |
| 1 | 14.9 | 100 |
| 3 | 14.2 | 95.3 |
| 5 | 13.5 | 90.6 |
| 10 | 11.4 | 76.5 |
| 20 | 5.6 | 37.6 |

[Table 8]

| Rate (C) | Discharge capacity (mAh) | Utilization factor (%) |
|---|---|---|
| 0.5 | 15.5 | 100 |
| 1 | 14.9 | 96.8 |
| 3 | 14.5 | 94.2 |
| 5 | 14.0 | 90.9 |

(continued)

| Rate (C) | Discharge capacity (mAh) | Utilization factor (%) |
|---|---|---|
| 10 | 12.8 | 83.1 |
| 20 | 3.6 | 23.4 |

When the carbon material of this example was used as a lithium ion secondary battery negative electrode, the utilization factor was approximately the same even with a high charge-discharge rate (10C), but the charge-discharge capacities at each rate were slightly lower compared to Examples 1 and 2.

[Comparative Example 3]

(1) Fabrication of negative electrode carbon material

Desulfurized vacuum gas oil (sulfur content: 500 ppm by weight, 15°C density: 0.88 g/cm$^3$) was subjected to fluidized catalytic cracking to obtain fluidized catalytic cracked bottom oil. The fluidized catalytic cracked bottom oil was introduced into a delayed coker and treated under inert gas at 550°C to obtain petroleum raw coke. Next, the raw coke was introduced into a rotary kiln and calcined at 1400°C to obtain simple stock oil needle coke. The obtained needle coke was pulverized to obtain simple stock oil coke fine particles with a mean particle size of 25 $\mu$m.
The simple stock oil coke fine particles were graphitized at 3000°C, yielding a graphitized product with the properties shown in Table 9 together with the properties of the simple stock oil coke fine particles.

[Table 9]

| Carbon material | True density (g/cm$^3$) | $d_{002}$ (nm) | La (nm) | Lc (nm) |
|---|---|---|---|---|
| Simple stock oil coke | 2.133 | 0.3446 | - | 6 |
| 3000°C-Treated product | 2.254 | 0.3362 | 240 | 75 |

(2) Evaluation of anode material charge-discharge

An evaluation cell was fabricated by the same procedure as Example 1, except that the aforementioned needle coke was used as the negative electrode active material. The results of evaluating the charge rate property and discharge rate property in the same manner as Example 1 are shown in Table 10 and Table 11.

[Table 10]

| Rate (C) | Charge capacity (mAh) | Utilization factor (%) |
|---|---|---|
| 0.5 | 16.0 | 100 |
| 1 | 15.0 | 93.7 |
| 3 | 13.7 | 85.6 |
| 5 | 13.0 | 81.2 |
| 10 | 10.0 | 62.5 |
| 20 | 3.0 | 18.8 |

[Table 11]

| Rate (C) | Discharge capacity (mAh) | Utilization factor (%) |
|---|---|---|
| 0.5 | 16.0 | 100 |
| 1 | 14.8 | 92.5 |
| 3 | 13.5 | 84.3 |
| 5 | 12.3 | 76.8 |

(continued)

| Rate (C) | Discharge capacity (mAh) | Utilization factor (%) |
|---|---|---|
| 10 | 10.2 | 63.7 |
| 20 | 2.8 | 17.5 |

As shown in Tables 10 and 11, when the carbon material of this example was used as a lithium ion secondary battery negative electrode, the charge-discharge capacity and utilization factor were lower than Examples 1 and 2 when the high charge-discharge rate was high (10C).

**Industrial Applicability**

According to the invention it is possible to provide a method for producing an amorphous carbon material for the negative electrode of a lithium ion secondary battery, that is useful for achieving high levels of both excellent input/output characteristics and high energy density per unit volume in lithium ion secondary batteries.

**Claims**

1. A method for producing an amorphous carbon material for the negative electrode of a lithium ion secondary battery, comprising a step of coking treatment of a stock oil composition obtained by combining two or more different stock oils selected from among vacuum residue oil, FCC heavy oil and desulfurized heavy oil produced in the petroleum refining process, followed by a step of calcining at a temperature of 1350-1450°C to obtain the amorphous carbon material having a true density of 1.800-2.165 g/cm$^3$, but having a true density of 2.255 g/cm$^3$ or greater, and having a mean interlayer distance $d_{002}$ of no greater than 0.3361 nm according to X-ray diffraction when the amorphous carbon material is subjected to graphitizing in an inert gas atmosphere at a temperature of 3000°C.

2. The method for producing an amorphous carbon material according to claim 1, having a crystallite size Lc of 3-12 nm in the c-axial direction according to X-ray diffraction, and a crystallite size Lc of 80 nm or greater when subjected to the graphitizing.

3. The method of producing an amorphous carbon material according to claim 1 or 2, having a crystallite size La of 250 nm or greater in the a-axial direction according to X-ray diffraction when subjected to the graphitizing.

**Patentansprüche**

1. Verfahren zum Herstellen eines amorphen Kohlenstoffmaterials für die negative Elektrode einer Lithiumionen-Sekundärbatterie, umfassend einen Schritt einer Verkokungsbehandlung einer Einsatzmaterialölzusammensetzung, die durch Kombinieren von zwei oder mehr unterschiedlichen Einsatzmaterialölen, ausgewählt aus Vakuumrückstandsöl, FCC-Schweröl und entschwefeltem Schweröl, das in dem Erdölraffinationsprozess erzeugt wird, erhalten wird, gefolgt von einem Schritt des Kalzinierens bei einer Temperatur von 1350-1450 °C, um das amorphe Kohlenstoffmaterial zu erhalten, das eine wahre Dichte von 1,800-2,165 g/cm$^3$ aufweist, aber eine wahre Dichte von 2,255 g/cm$^3$ oder größer aufweist und einen mittleren Schichtenabstand $d_{002}$ von nicht größer als 0,3361 nm gemäß Röntgenbeugung aufweist, wenn das amorphe Kohlenstoffmaterial einem Graphitisieren in einer Inertgasatmosphäre bei einer Temperatur von 3000 °C unterworfen wird.

2. Verfahren zum Herstellen eines amorphen Kohlenstoffmaterials gemäß Anspruch 1, mit einer Kristallitgröße Lc von 3-12 nm in der c-axialen Richtung gemäß Röntgenbeugung, und einer Kristallitgröße Lc von 80 nm oder größer, wenn es dem Graphitisieren unterworfen wird.

3. Verfahren zum Herstellen eines amorphen Kohlenstoffmaterials gemäß Anspruch 1 oder 2, mit einer Kristallitgröße La von 250 nm oder größer in der a-axialen Richtung gemäß Röntgenbeugung, wenn es dem Graphitisieren unterworfen wird.

**Revendications**

1. Procédé de production d'un matériau de carbone amorphe pour l'électrode négative d'une batterie auxiliaire lithium-ion, comprenant une étape de traitement par cokéfaction d'une composition d'huile obtenue en combinant deux huiles différentes ou plus sélectionnées parmi une huile résiduelle sous vide, une huile lourde FCC et une huile lourde désulfurisée produites dans le processus de raffinage du pétrole, suivie d'une étape de calcination à une température de 1350-1450 °C pour obtenir le matériau de carbone amorphe présentant une densité réelle de 1,800-2,165 g/cm3, mais présentant une densité réelle de 2,255 g/cm3 ou plus, et présentant une distance inter-couche moyenne $d_{002}$ inférieure à 0,3361 nm selon une diffraction des rayons X lorsque le matériau de carbone amorphe est sujet à une graphitisation dans une atmosphère de gaz inerte à une température de 3000 °C.

2. Le procédé de production d'un matériau de carbone amorphe selon la revendication 1, présentant une taille de cristallites Lc de 3-12 nm dans la direction axiale c selon une diffraction des rayons X, et une taille de cristallites Lc de 80 nm ou plus en cas de graphitisation.

3. Le procédé de production d'un matériau de carbone amorphe selon la revendication 1 ou 2, présentant une taille de cristallites La de 250 nm ou plus dans la direction axiale a selon une diffraction des rayons X en cas de graphitisation.

**EP 2 192 641 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3056519 B
- JP 4024831 A
- EP 0205856 A2